# EUROPEAN PATENT APPLICATION

(11) **EP 4 786 314 A1**
(43) Date of publication of application: **05.08.2026**
(21) Application number: 26151181.0
(22) Date of filing: 09.01.2026
(51) Int. Cl.: B62D 15/02, G08G 1/0969

(54) **AUTOMATED VALET PARKING SYSTEM AND AUTOMATED VALET PARKING METHOD**

(30) Priority: 03.02.2025 JP 2025016008
(71) Applicant: Toyota Jidosha Kabushiki Kaisha, Toyota-shi, Aichi-ken 471-8571 (JP)
(72) Inventor: SUGANO, Tatsuya, TOYOTA-SHI, AICHI-KEN, 471-8571 (JP); KINUGASA, Hidenobu, TOYOTA-SHI, AICHI-KEN, 471-8571 (JP); YAMAMOTO, Takahiro, TOYOTA-SHI, AICHI-KEN, 471-8571 (JP); ESHIMA, Kazuhito, TOYOTA-SHI, AICHI-KEN, 471-8571 (JP)
(74) Representative: Cabinet Beau de Loménie

(57) **Abstract**

One or more processing circuitry (11, 31) acquires an in-vehicle camera image taken by a camera mounted on a vehicle (VH). The one or more processing circuitry generates highlight scene information on automated valet parking mission based on the in-vehicle camera images acquired while the vehicle is performing an automated valet parking mission and before the vehicle power is stopped at a completion location of the automated valet parking mission. The one or more processing circuitry (11, 31) transmits information regarding automated valet parking of the vehicle, including at least the highlight scene information, to a user terminal (40) of the vehicle. The user terminal (40) outputs information on the automated valet parking.

## Description

### TECHNICAL FIELD

The present disclosure concerns automated valet parking (AVP) for vehicles within a predetermined zone, such as a parking lot.

### BACKGROUND

DE102012222562A1 discloses a system that performs AVP using in-vehicle camera images obtained from a camera mounted on a vehicle and infrastructure camera images obtained from cameras placed on walls and support pillars of a parking lot.

### LIST OF RELATED ART

Following is a list of patent literatures which the applicant has noticed as related arts of the present invention.

Patent Literature 1: DE102012222562A1

When AVP is performed by the system, respective parking locations of the vehicles are determined by the system. Therefore, users of an AVP service (hereinafter referred to as "AVP users") cannot know the parking locations of their vehicles unless the system provides them with the information.

In this regard, if the system provides map information showing the parking location of the AVP user's vehicle, for example, it is expected to give the AVP user a secure feeling. Furthermore, if the system could provide the in-vehicle camera image of the AVP user's vehicle while it is stopped in the parking location, this secure feeling would be enhanced. However, vehicle power is cut off while the vehicle stops in the parking location. Therefore, it is difficult to provide the in-vehicle camera images to the AVP users.

The present disclosure addresses the problem and one purpose of the present disclosure is to provide AVP technology that can give a user of AVP service a secure feeling by providing the user with the in-vehicle camera images.

### SUMMARY

A first aspect of the present disclosure is a system for automated valet parking of a vehicle within a predetermined zone.

The system comprises one or more memory devices, one or more processing circuitry, and a user terminal of the vehicle. The one or more memory devices are configured to store in-vehicle camera images taken by a camera mounted on the vehicle. The one or more processing circuitry is configured to be able to communicate with the one or more memory devices. The user terminal is configured to be able to communicate with the one or more memory devices. The user terminal is also configured to output information on automated valet parking of the vehicle received from the one or more processing circuitry.

The one or more processing circuitry is configured to: generate highlight scene information on automated valet parking mission based on the in-vehicle camera images acquired during an automated valet parking mission of the vehicle and before vehicle power is stopped at a completion location of the automated valet parking mission; and transmit information on the automated valet parking mission, including at least the highlight scene information, to the user terminal.

A second aspect of the present disclosure is a method for automated valet parking of a vehicle within a predetermined zone.

The method comprises: one or more processing circuitry acquiring in-vehicle camera images taken by a camera mounted on the vehicle: the one or more processing circuitry generating highlight scene information on automated valet parking mission based on the in-vehicle camera images acquired while the vehicle is performing an automated valet parking mission and before the vehicle power is stopped at a completion location of the automated valet parking mission; the one or more processing circuitry transmitting information on automated valet parking of the vehicle, including at least the highlight scene information, to a user terminal of the vehicle; and the user terminal outputting the information on the automated valet parking.

According to the present disclosure, the highlight scene information on AVP mission is generated based on in-vehicle camera images acquired during AVP mission of the vehicle and before the vehicle power is shut down. The information on AVP including the highlight scene information is sent to the user terminal of the vehicle and output from this user terminal. Therefore, it is possible to give a secure feeling to AVP users who see the highlight scene information.

### BRIEF DESCRIPTION OF DRAWINGS

FIG. 1 is a conceptual diagram showing an example configuration of an automated valet parking system;
FIG. 2 is a block diagram showing an example of a vehicle system configuration;
FIG. 3 is a sequence diagram showing processing flow related to automated valet parking;
FIG. 4 is a diagram summarizing transitions among screens displayed on a user terminal display in conjunction with processing relating to automated valet parking;
FIG. 5 is a diagram showing an example of display output (log in screen);
FIG. 6 is a diagram showing an example of display output (home screen);
FIG. 7 is a diagram showing an example of display output (map screen);
FIG. 8 is a diagram showing an example of display output (parking lot introduction screen);
FIG. 9 is a diagram showing an example of display output (reservation confirmation screen);
FIG. 10 is a diagram showing an example of display output (reservation completion screen);
FIG. 11 is a diagram showing an example of display output (home screen);
FIG. 12 is a diagram showing an example of display output (check-in screen);
FIG. 13 is a diagram showing an example of display output (pre-service confirmation screen);
FIG. 14 is a diagram showing an example of display output (preparation notification screen);
FIG. 15 is a diagram showing an example of display output (preparation notification screen);
FIG. 16 is a diagram showing an example of display output (preparation notification screen);
FIG. 17 is a diagram showing an example of display output (preparation notification screen);
FIG. 18 is a diagram showing an example of display output (entry mission notification screen);
FIG. 19 is a diagram showing an example of display output (parking notification screen);
FIG. 20 is a diagram showing an example of display output (parking notification screen);
FIG. 21 is a diagram showing an example of display output (map screen);
FIG. 22 is a diagram showing an example of display output (surrounding vehicle screen);
FIG. 23 is a diagram showing an example of display output (parking notification screen);
FIG. 24 is a diagram showing an example of display output (exit mission notification screen);
FIG. 25 is a diagram showing an example of display output (map screen);
FIG. 26 is a diagram showing an example of display output (exit completion notification screen); and
FIG. 27 is a diagram showing an example of display output (service completion notification screen).

### DESCRIPTION OF EMBODIMENT

An embodiment of the present disclosure will be described with reference to the drawings. In each drawing, the same or corresponding parts are denoted by the same signs, and their explanations will be simplified or omitted.

### 1. Overall system configuration example

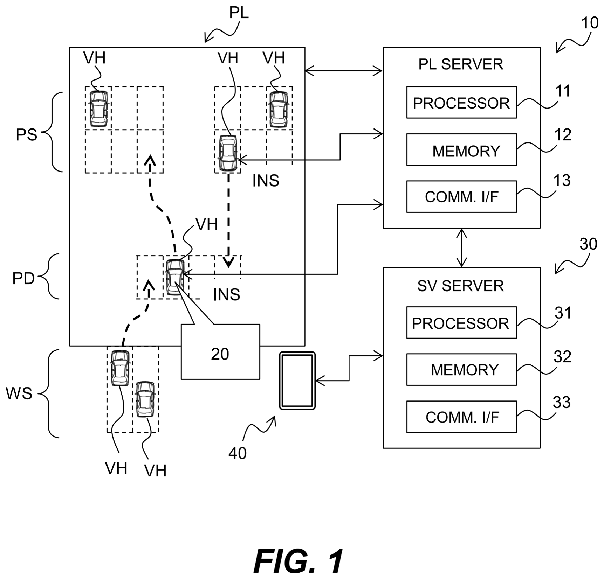

An automated valet parking (AVP) system is a system that performs parking operation of vehicles automatically within a predetermined zone such as a parking lot, a factory, and a facility ground. FIG. 1 is a diagram showing a configuration example of the AVP system. FIG. 1 illustrates a parking lot PL as a predetermined zone. The parking lot PL has a configuration capable of implementing AVP. The configuration capable of implementing AVP includes a pickup/drop-off space PD and a parking space PS.

The pick-up/drop-off space PD is a space for getting off from and/or getting on to a vehicle VH. The parking space PS is a space for parking the vehicle VH. The configuration capable of implementing AVP also includes markers that assist movement of the vehicle VH within the parking lot PL, sensors (e.g., cameras, radars) that monitor the vehicle VH within the parking lot PL, and the like.

FIG. 1 also illustrates a server 10 (hereinafter also referred to as a "parking lot server") that manages AVPs at the parking lot PL. The parking lot server (pl server) 10 performs various processing related to a management of an operation authority of the vehicle VH required for AVP in the parking lot PL. The parking lot server 10 further performs various processing related to execution of AVP missions (e.g., parking entry mission, parking exit mission, re-parking mission, etc.) by acquiring various information from the sensors of the parking lot PL. The parking lot server 10 may be a combination of a server (a local server) that performs various processing related to the execution of the AVP missions and a server (a cloud server) that performs various processing related to the management of the AVPs.

The parking lot server 10 is typically a computer including at least one processor 11, at least one memory device 12, and a communication I/F (interface) 13. The processor 11 executes various processing. Examples of the processor 11 include a CPU (Central Processing Unit), a GPU (Graphics Processing Unit), an ASIC (Application Specific Integrated Circuit), and an FPGA (Field-Programmable Gate Array). The processor 11 may also be referred to as "circuitry" or "processing circuitry." The "circuitry" is hardware that is programmed to implement a described function or that performs a function. The processor 11 reads various information from the memory device 12 and stores the various information in the memory device 12.

Examples of the memory device 12 include a volatile memory, a non-volatile memory, a hard disk drive (HDD), and a solid state drive (SSD). Examples of the various information stored in the memory device 12 include parking lot map information, parking lot usage information, and vehicle management information. The parking lot map information indicates map information on the parking lot PL. The parking lot usage information is information on usage status of the pick-up/drop-off space PD in the parking lot PL and that of the parking space PS (i.e., vacancy information). The vehicle management information includes information such as vehicle ID, entry/exit time, and vehicle location. The vehicle management information is managed for each vehicle VH. The vehicle ID is identification information of the vehicle VH. The parking entry/exit time is information relating to the time of the vehicle VH's parking entry/exit (e.g., reservation entry/exit time, actual entry/exit time, etc.). The vehicle location indicates information on the location of the vehicle VH within the parking lot PL.

The communication I/F 13 is an interface for communicating with devices external to the parking lot server 10 to transmit and receive information. For example, the communication I/F 13 is made up of a device for connecting to surrounding devices via a wireless LAN, a device for connecting to a mobile object communication network, a device for connecting to the Internet, and the like. The parking lot server 10 transmits and receives information to and from the vehicle VH (a vehicle system 20) via the communication I/F 13. The parking lot server 10 also transmits and receives information to and from a supervisory server 30 via the communication I/F 13.

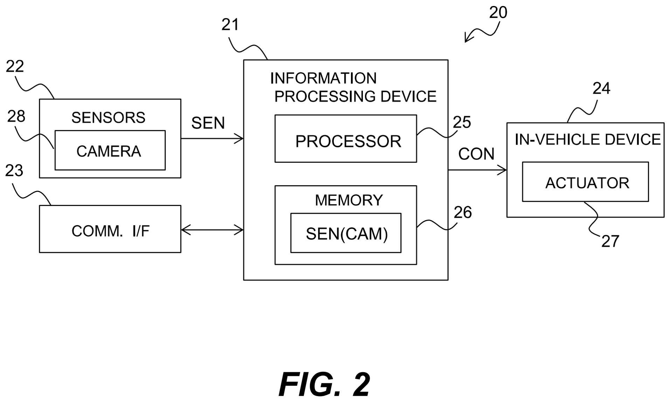

FIG. 2 is a diagram showing a configuration example of the vehicle system 20. In the example shown in FIG. 2, the vehicle system 20 is installed in each of the vehicles VH as a system capable of performing the AVP. In the example shown in FIG. 2, the vehicle system 20 includes an information processing device 21, sensors 22, a communication I/F 23, and an in-vehicle device 24.

The information processing device 21 is communicably connected to the sensors 22, the communication I/F 23, and the in-vehicle device 24. The information processing device 21 is a computer that performs information processing related to control of the vehicle VH based on various information. The information processing device 21 includes at least one processor 25 and at least one memory device 26. The example configuration of the processor 25 is the same as that of the processor 11 shown in FIG 1. Also, the configuration example of the memory device 26 is the same as that of the memory device 12 shown in FIG 1. The processor 25 cooperates with the memory device 26 to realize information processing related to the control of the vehicle VH.

For example, the information processing device 21 is configured by one or more ECUs (Electronic Control Units). In another example, the information processing device 21 is configured with a kit (e.g., an AVP kit) for functionality provided by the parking lot server 10. The information processing device 21 generates and outputs control signals for the vehicle VH through information processing. When the vehicle VH receives an AVP mission instruction INS from the parking lot server 10, the information processing device 21 generates a control signal CON for the AVP mission. The control signal CON is transmitted to the in-vehicle device 24.

The sensors 22 detect information on surrounding environment and driving state of the vehicle VH. The sensors 22 include a wide-angle lens camera 28. Examples of the camera 28 include a front camera that takes pictures in front of the vehicle VH, a side camera that takes pictures on the sides of the vehicle VH, and a rear camera that takes pictures behind the vehicle VH. Examples of the sensors 22 other than the camera 28 include a radar, a LiDAR, a wheel speed sensor, an IMU (Inertial Measurement Unit), and a GNSS (Global Navigation Satellite System) sensor. The sensor information SEN acquired by the sensors 22 is transmitted from the sensors 22 to the information processing device 21 and stored in the memory device 26. The sensor information SEN includes a camera image CAM captured by the camera 28. The camera image CAM corresponds to the "in-vehicle camera image" in the present disclosure. The camera image CAM may be a still image or a video image.

The communication I/F 23 is an interface for communicating with devices external to the vehicle VH to transmit and receive information. The vehicle VH transmits and receives information to and from the parking lot server 10 via the communication I/F 23. The vehicle VH can also transmit and receive information to and from a user terminal 40 via the communication I/F 23.

The in-vehicle device 24 includes lighting devices, interior lighting devices, a horn, wipers, doors, door windows, mirrors, a driving device, a brake device, a steering device, an HMI (Human Machine Interface), and the like. Each device of the in-vehicle device 24 includes an actuator 27 that is controllable by the information processing device 21. The in-vehicle device 24 receives a control signal from the information processing device 21. The actuator 27 operates in accordance with the control signal, whereby the information processing device 21 controls the in-vehicle device 24. Furthermore, the control of the in-vehicle device 24 realizes the control of the vehicle VH. The actuator 27 operates in accordance with the control signal CON for the AVP mission, thereby realizing the vehicle control for the AVP mission.

Return to FIG. 1 and continue to explain the overall configuration example. FIG. 1 also illustrates the supervisory server (sv server) 30. The supervisory server 30 is a server (a cloud server) that manages an entire AVP service. The supervisory server 30 and the parking lot server 10 are examples of the "management device" of the present disclosure. The supervisory server 30 manages AVP users, vehicles (i.e., the vehicle VHs) that have the vehicle system 20, and the like. A driver of the vehicle VH is an example of the AVP user. Examples of the management of the AVP user include AVP user authentication and management of AVP usage reservations by the AVP users. Examples of the management of the AVP user include management of vehicle VH information on the vehicle, that of the vehicle VH operation authority, and that of the vehicle VH operation log during the execution of the AVP mission.

The supervisory server 30 is typically a computer including at least one processor 31, at least one memory device 32, and a communication I/F 33. The configuration example of the processor 31 is the same as that of the processor 11. Also, the configuration example of the memory device 32 is the same as that of the memory device 12.

Examples of the various information stored in the memory device 32 include AVP reservation information, AVP user information, and AVP vehicle information. The AVP reservation information is information on usage reservation of the AVP service. Examples of the AVP reservation information include scheduled usage date and time of the AVP service, parking lot ID of a reservation target parking lot PL, and the vehicle ID of a reservation target vehicle VH. Examples of the AVP user information include user ID of the AVP user, IP address of the user terminal 40, vehicle ID of the vehicle VH, and the payment method (e.g., a credit card number). The AVP user information is managed for each AVP user. Examples of the AVP vehicle information include vehicle ID of the vehicle VH, IP address of the vehicle system 20, the sensor information SEN (including the camera image CAM) acquired during the execution of the AVP mission, and operation log of the vehicle VH. The AVP vehicle information is managed for each vehicle VH (the vehicle system 20).

The communication I/F 33 is an interface for communicating with devices external to the supervisory server 30 to transmit and receive information. For example, the communication I/F 33 is made up of a device for connecting to surrounding devices via a wireless LAN, a device for connecting to a mobile object communication network, a device for connecting to the Internet, and the like. The supervisory server 30 transmits and receives information to and from the parking lot server 10 via the communication I/F 33. The supervisory server 30 also transmits and receives information to and from the user terminal 40 via the communication I/F 33.

The user terminal 40 is a terminal carried by the AVP user (e.g., a smartphone). The user terminal 40 is an example of the "user terminal" in the present disclosure. The user terminal 40 includes at least one processor, at least one memory device, and a communication I/F. The configuration example of the processor of the user terminal 40 is the same as that of the processor 11. Also, the configuration example of the memory device of the user terminal 40 is the same as that of the memory device 12. The user terminal 40 also includes a display for outputting various information.

The AVP user operates the user terminal 40 to transmit and receive information to and from the vehicle VH (the vehicle system 20). The AVP user also operates the user terminal 40 to transmit and receive information to and from the supervisory server 30. The user terminal 40 is used by the AVP user for the AVP service including usage registration and usage reservation. The user terminal 40 is also used as appropriate for the AVP at the parking lot PL. Instead of operating the user terminal 40, information on the AVP may be transmitted and received by operating the in-vehicle device 24 (e.g., the HMI) shown in FIG. 2.

When the AVP service usage registration or the usage reservation is made, the processor of the user terminal 40 processes the information and outputs information on the AVP service to the display of the user terminal 40. The processor of the user terminal 40 also processes information when the AVP mission is made at the parking lot PL, and outputs information on the AVP mission to the display. Examples of various information output to the display of the user terminal 40 will be described later.

### 2. Processing example related to AVP

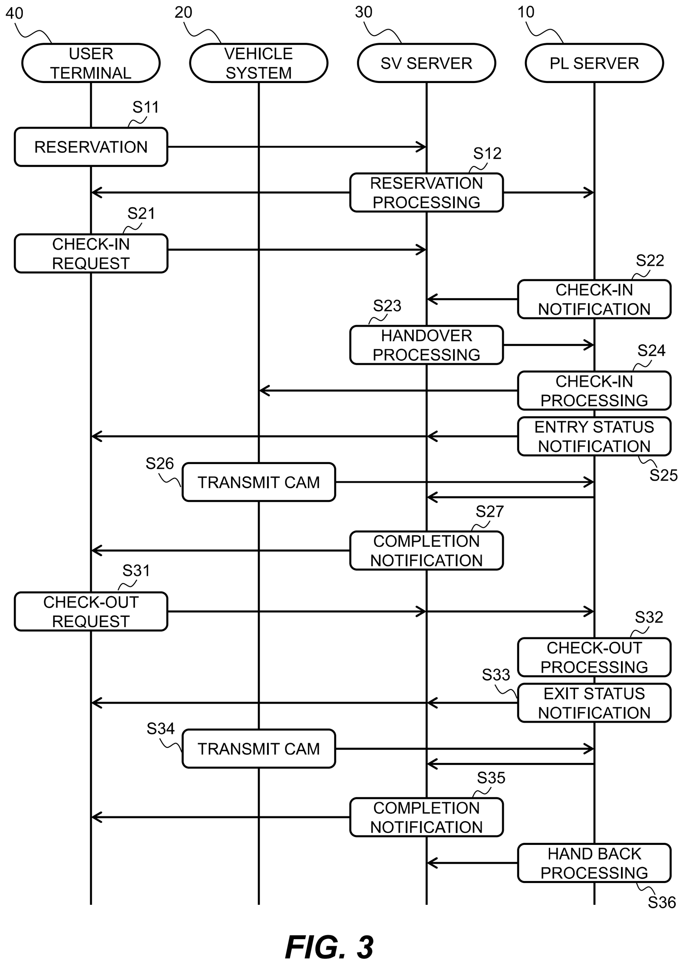

FIG. 3 is a sequence diagram showing the flow of processing related to the AVP. FIG. 3 illustrates the parking lot server 10, the vehicle system 20, the supervisory server 30 and the user terminal 40 described in FIGS 1 and 2.

### 2-1. Processing example related to reservation

In the example shown in FIG. 3, processing of step S11 is executed first. In the processing of step S11, the usage reservation of the AVP service is executed. The usage reservation is executed by transmitting the AVP reservation information and the user information from the user terminal 40 to the supervisory server 30. Examples of the AVP reservation information and the user information have already been described.

Following step S11, the processing of step S12 is carried out. In the processing of step S12, reservation processing of the AVP service is executed. The reservation processing is executed by the supervisory server 30 that receives information from the user terminal 40. In the reservation processing, for example, reservation completion information is sent to the user terminal 40 that sent the AVP reservation information and user information. Examples of the reservation completion information include reservation ID of the AVP service, scheduled usage date and time of the AVP service, and parking lot PL information of the reservation target parking lot PL.

In the reservation processing, the parking lot server 10 that manages the parking lot PL of the reservation target included in the AVP reservation information is also identified based on the parking lot ID of the parking lot PL. Then, the vehicle ID of the reservation target vehicle VH and the like are sent to the identified parking lot server 10 at the scheduled usage date and time of the AVP service included in the AVP reservation information. In the reservation processing, the IP address of the vehicle system 20 may be identified based on the vehicle ID of the reservation target vehicle VH included in the AVP reservation information, and further, this identified IP address may be sent to the parking lot server 10 together with the vehicle ID.

The processing of steps S11 and S12 is related to the usage reservation of the AVP service. The processing of steps S21 to S27 and steps S31 to S36 is related to the actual use of the AVP service. The processing of steps S21 to S27 is related to the parking entry of the reservation target vehicle VH. The processing of steps S31 to S36 is processing related to the parking exit of the reservation target vehicle VH.

### 2-2. Processing example related to parking entry

In the processing of step S21, a check-in request for the reservation target vehicle VH is made. The check-in request includes, for example, the reservation completion information described above. The check-in request is sent from the user terminal 40 to the supervisory server 30. The check-in request is transmitted, for example, by an AVP user who gets off the reservation target vehicle VH in the pick-up/drop-off space PD and operates the user terminal 40. When the check-in request is sent, a handover instruction is also sent. The handover is a process for transferring the operation authority of the reservation target vehicle VH from the AVP user to the parking lot server 10.

In the processing of step S22, a check-in notification is sent. The check-in notification is sent from the parking lot server 10 to the supervisory server 30 when the parking lot server 10 recognizes the reservation target vehicle VH that has entered the pick-up/drop-off space PD, for example. The processing of step S22 may be executed before the processing of step S21. That is, the supervisory server 30 may receive the check-in notification from the parking lot server 10 before receiving the check-in request from the user terminal 40.

If the supervisory server 30 receives both the handover instruction and the check-in notification, the processing of step S23 is executed. In the processing of step S23, handover processing is executed. In the handover processing, the operation authority of the reservation target vehicle VH is passed from the supervisory server 30 to the parking lot server 10. After the handover processing is completed, the operation authority is transferred to the parking lot server 10 until hand back processing, which will be described later, is completed. The execution of the AVP mission by the parking lot server 10 is made possible by this temporary transfer of the operation authority.

Following the processing of step S23, the processing of step S24 is carried out. In the processing of step S24, parking entry processing is executed. The parking entry processing is a process for carrying out the parking entry mission, and is executed by the parking lot server 10 that has the operation authority for the reservation target vehicle VH (i.e., a target of the parking entry mission). In the parking entry processing, for example, a driving path of the target vehicle VH of the parking entry mission (hereinafter also referred to as "parking entry target TVH-EN") is set. The driving paths are a set of path points that the parking entry target TVH-EN must pass through from its current location to its destination (e.g., from the pick-up/drop-off space PD to the parking space PS). The driving paths are generated sequentially based on the parking lot map information stored in the memory device 12, for example.

In the parking entry processing, a parking entry mission instruction INS including at least information on the driving path is transmitted from the parking lot server 10 to the vehicle system 20 of the parking entry target TVH-EN. The vehicle system 20 (the information processing device 21) of the parking entry target TVH-EN generates the control signal CON for the parking entry mission based on the instruction INS received from the parking lot server 10, and controls the in-vehicle device 24 of the parking entry target TVH-EN.

During the parking entry processing, the processing of step S25 is carried out. In the processing of step S25, a parking entry status is notified. The parking entry status includes the progress status of the parking entry mission. The parking entry status is notified from the parking lot server 10 to the supervisory server 30. The supervisory server 30 that receives the parking entry status reports the parking entry status to the user terminal 40 that sent the check-in request. The notification of the parking entry status by the parking lot server 10 and the reporting of this parking entry status by the supervisory server 30 are repeated, for example, until the parking entry target TVH-EN arrives at the destination (i.e., the parking space PS).

During the parking entry processing, the processing of step S26 is also carried out. In the processing of step S26, the camera image CAM is transmitted. The camera image CAM is transmitted from the vehicle system 20 of the parking entry target TVH-EN to the parking lot server 10. The camera image CAM is transmitted even after the parking entry target TVH-EN arrives at the destination (i.e., the parking space PS). However, after a predetermined waiting time has elapsed, the transmission of the camera image CAM also ends as the power supply to the vehicle system 20 (including the communication system and camera system) is turned off.

When the parking entry target TVH-EN arrives at the destination, the processing of step S27 is carried out. In the processing of step S27, the completion of the parking entry mission is reported. The completion report is made, for example, as follows: That is, the parking lot server 10, which has confirmed that the parking entry target TVH-EN has arrived at the destination, notifies the supervisory server 30 of the completion of the parking entry mission. Upon receiving the completion notification, the supervisory server 30 reports the completion of the parking entry mission to the user terminal 40 that sent the check-in request. In another example, the supervisory server 30, having confirmed the arrival of the parking entry target TVH-EN at the destination based on the parking entry status, reports the completion of the parking entry mission to the user terminal 40 that sent the check-in request.

The parking entry mission completion report includes, for example, information notifying that the parking entry target TVH-EN is parked, map information showing a completion location of the parking entry mission (i.e., the parking space PS where the parking entry target TVH-EN is stopped), and estimated time information for check-out. The completion report for the parking entry mission may be omitted. The completion of the parking entry mission may be reported in response to a request from the user terminal 40 that sent the check-in request.

In the embodiment, highlight scene information for the parking entry mission is generated based on the camera image CAM acquired from the vehicle system 20 of the parking entry target TVH-EN during parking entry processing and before power is turned off at the destination. Highlight scenes are particularly important and memorable scenes in parking entry mission. Examples of such scenes include a scene of starting from the pick-up/drop-off space PD, a scene of driving in the parking lot PL, and a scene of entering the parking space PS. In particular, the scene of entering the parking space includes a turn-wheel scene, a backing-up scene, and the like. The highlight scene information includes a front image of the parking entry target TVH-EN viewed from the front, a rear image of the parking entry target TVH-EN viewed from behind, and a bird's eye view image of the parking entry target TVH-EN viewed from directly above or diagonally above.

The front image is generated, for example, as follows: First, the camera image CAMs in front and on the sides of the parking entry target TVH-EN are used to convert the viewpoint so that the image is seen from a virtual camera set in front of the vehicle body. The image after the viewpoint conversion is then combined with a separately prepared image of the front of the vehicle body. This generates the front image. The rear image and bird's eye view image are generated by the same viewpoint transformation and image synthesis as the front image. The highlight scene information may be a still image or a video. However, from the aspect of emphasizing highlight scene more memorable, highlight scene information is preferable in video images rather than still images. Examples of video highlight scene information include bird's eye view video, which is generated based on images seen from a virtual camera that circles around the vehicle while looking down on the vehicle from diagonally above. The length of the front video, rear video, and bird's eye view video is, for example, from a few seconds to 15 seconds.

The highlight scene information is generated before or after the processing of step S27. The highlight scene information generated before the processing of step S27 is sent to the user terminal 40 together with the completion report of the parking entry mission. When reporting the completion of the parking entry mission, if there is a request for highlight scene information from user terminal 40, it is acceptable to send the highlight scene information in response to this request. The highlight scene information generated after the processing of step S27 may be transmitted to the user terminal 40 separately from the completion report of the parking entry mission. In this case, the highlight scene information may be automatically transmitted to the user terminal 40 after the highlight scene information is generated, or may be transmitted in response to the request from the user terminal 40.

### 2-3. Processing example related to parking exit

In the processing of step S31, a check-out request for the reservation target vehicle VH is made. The check-out request is sent from the user terminal 40 to the supervisory server 30. The check-out request is sent, for example, by the AVP user operating the user terminal 40 inside or outside of the parking lot PL.

Following the processing of step S31, the processing of step S32 is carried out. In the processing of step S32, parking exit processing is executed. The parking exit processing is a process for carrying out the parking exit mission, and is executed by the parking lot server 10 that has the operation authority for the vehicle VH that is the reservation target (i.e., a target of the parking exit mission). In the parking exit processing, for example, the driving path of the target vehicle VH of the parking exit mission (hereinafter also referred to as a "parking exit target TVH-EX") is set. The driving path is a set of path points that the parking exit target TVH-EX must pass through from its current location to its destination (e.g., from the parking space PS to the pick-up/drop-off space PD). The driving path is generated sequentially based on the parking lot map information stored in the memory device 12, for example.

In the parking exit processing, a parking exit mission instruction INS including at least information on the driving path is transmitted from the parking lot server 10 to the vehicle system 20 of the parking exit target TVH-EX. The vehicle system 20 (the information processing device 21) of the parking exit target TVH-EX generates a control signal CON for the parking exit mission based on the instruction INS received from the parking lot server 10 and controls the in-vehicle device 24 of the parking exit target TVH-EX.

During the parking exit processing, the processing of step S33 is carried out. In the processing of step S33, the parking exit status is notified. The parking exit status includes a progress status of the parking exit mission. The parking lot server 10 notifies the supervisory server 30 of the parking exit status. The supervisory server 30 that receives the parking exit status reports this parking exit status to the user terminal 40 that sent the check-out request. The notification of the parking exit status by the parking lot server 10 and the reporting on this parking exit status by the supervisory server 30 are repeated, for example, until the parking exit target TVH-EX arrives at the destination (i.e., the pick-up/drop-off space PD).

During the parking exit processing, the processing of step S34 is also executed. In the processing of step S34, the camera image CAM is transmitted. The camera image CAM is transmitted from the vehicle system 20 of the parking exit target TVH-EX to the parking lot server 10. The camera image CAM is transmitted even after the parking exit target TVH-EX arrives at the destination (i.e., the pick-up/drop-off space PD). However, after a predetermined waiting time has elapsed, the power supply to the vehicle system 20 is turned off and the transmission of the camera image CAM also ends.

When the parking exit target TVH-EX arrives at the destination, the processing of step S35 is carried out. In the processing of step S35, the completion of the parking exit mission is reported. The completion report is made, for example, as follows: That is, the parking lot server 10, which has confirmed that the parking exit target TVH-EX has arrived at the destination, notifies the supervisory server 30 of the completion of the parking exit mission. Upon receiving the completion notification, the supervisory server 30 reports the completion of this parking exit mission to the user terminal 40 that sent the check-out request. In another example, the supervisory server 30, having confirmed that the parking exit target TVH-EX has arrived at the destination based on the parking exit situation, reports the completion of this parking exit mission to the user terminal 40 that sent the check-out request.

The parking exit mission completion report includes, for example, information notifying that the parking exit of the parking exit target TVH-EX has been completed, and map information indicating the completed location of the parking exit mission (i.e., the pick-up/drop-off space PD where the parking exit target TVH-EX is waiting).

In the embodiment, the highlight scene information for the parking exit mission is generated based on the camera image CAM acquired from the vehicle system 20 of the parking exit target TVH-EX during the parking exit processing and before the power is turned off at the destination. The highlight scene is a particularly important and memorable scene in the parking exit mission. Examples of such scenes include a scene starting from the parking space PS, a scene of driving in the parking lot PL, and a scene of entering the pick-up/drop-off space PD. The highlight scene information includes a front image of the parking exit target TVH-EX viewed from the front, a rear image of the parking exit target TVH-EX viewed from behind, and a bird's eye view image of the parking exit target TVH-EX viewed from directly above or diagonally above. Examples of generating the front image, rear image, and bird's eye view image are common to examples of generating these images during parking entry processing.

The highlight scene information is generated before or after the processing of step S35. The highlight scene information generated before the processing of step S35 is sent to the user terminal 40 together with the completion report of the parking exit mission. When completing the parking exit mission, if a request for the highlight scene information is made from the user terminal 40, it is acceptable to send the highlight scene information in response to that request. The highlight scene information generated after the processing of step S35 may be transmitted to the user terminal 40 separately from the completion report of the parking exit mission. In this case, the highlight scene information may be automatically transmitted to the user terminal 40 after the highlight scene information is generated, or may be transmitted in response to the request from the user terminal 40.

When the parking exit target TVH-EX arrives at the destination, the processing of step S36 is carried out. In step S36, hand back processing is executed. In the hand back processing, the operation authority of the parking exit target TVH-EX is returned from the parking lot server 10 to the AVP user. Therefore, after the hand back processing is executed, the AVP user who sent the check-out request can operate the parking exit target TVH-EX.

However, if the AVP user who sent the check-out request does not operate the parking exit target TVH-EX to start the parking exit target TVH-EX, the parking exit target TVH-EX will continue to occupy the pick-up/drop-off space PD. The parking exit target TVH-EX continuing to occupy the pick-up/drop-off space PD will lead to a decrease in turnover rate of the pick-up/drop-off space PD. Therefore, the return of the operation authority through the hand back processing is temporarily suspended until the supervisory server 30 receives a hand back instruction from the user terminal 40 that sent the check-out request.

The waiting time for the hand back instruction is, for example, several minutes to 30 minutes after the completion report of the parking exit mission is transmitted. If the hand back instruction is not received before the waiting time has elapsed, the supervisory server 30 performs re-parking processing. The re-parking processing is a process for carrying out the re-parking mission, and is carried out by the parking lot server 10 having the operation authority of the parking exit target TVH-EX. The content of the re-parking processing is basically the same as that of the parking entry processing. In addition, the various processing performed during the re-parking processing (e.g., notifying the re-parking status, reporting the completion of the re-parking mission, generating highlight scene information, etc.) are the same as those performed during the parking entry processing.

### 2-4. Processing example related to reposition

Incidentally, the AVP service includes auxiliary services that utilize various equipment within the parking lot PL. Examples of the auxiliary services include car washing, fueling, power supply, and inspections. When the auxiliary service is provided, the vehicle VH moves through the parking lot PL and heads to the designated spaces for various facilities. After the auxiliary service is completed, the vehicle VH returns to the parking space PS from the various facilities. When the auxiliary services are used, the AVP mission is also called a reposition mission. The processing for the reposition mission, that is, the content of reposition processing, is basically the same as that of the parking entry processing. In addition, various processing that are executed during the reposition processing (e.g., notifying the relocation status, reporting the completion of the reposition mission, generating highlight scene information, etc.) are the same as those that are performed during parking entry processing.

### 2-5. Highlight scene information generator

The highlight scene information is generated based on the camera image CAM acquired from the vehicle system 20 of the parking entry target TVH-EN (or the parking exit target TVH-EX). The camera image CAM is also transmitted from the vehicle system 20 to the supervisory server 30 via the parking lot server 10. The highlight scene information is transmitted by the supervisory server 30 that reports the completion of the parking entry mission or the like. Therefore, the entity responsible for generating the highlight scene information is assumed to be the supervisory server 30. However, the parking entry status and the like are also kept by the parking lot server 10, and the camera image CAM also acquires information from the parking lot server 10. Therefore, the highlight scene information may be generated in the parking lot server 10. In this case, the highlight scene information may be transmitted from the parking lot server 10 to the supervisory server 30 instead of the camera image CAM.

Furthermore, the camera image CAM is also acquired by the vehicle system 20 of the parking entry target TVH-EN (or the parking exit target TVH-EX). Therefore, the highlight scene information may be generated in the vehicle system 20. In this case, the highlight scene information may be transmitted from the vehicle system 20 to the parking lot server 10 instead of the camera image CAM. Furthermore, the parking lot server 10 that receives the highlight scene information may transmit it to the supervisory server 30.

### 3. Examples of various information on display

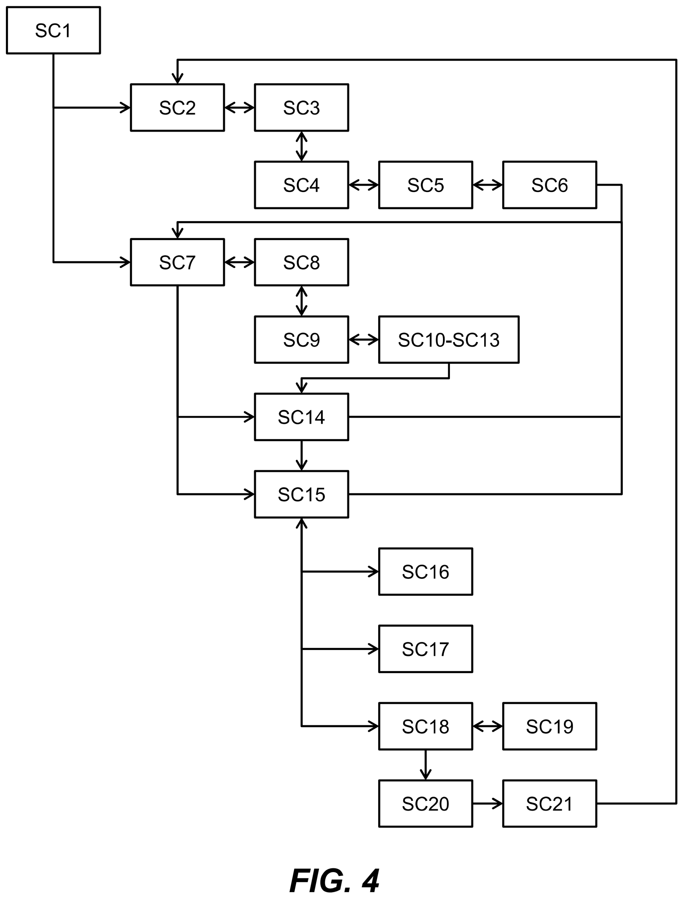

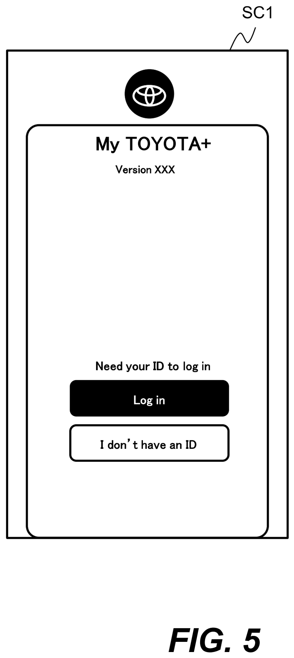

With reference to FIGS. 4-27, examples of various screens that are output to the display of the user terminal 40 in association with AVP-related processing will be described. FIGS. 5-27 are examples of various screens output to the display. FIG. 4 summarizes the screen transitions of the user terminal 40.

The screen SC1 shown in figure 5 is the log in screen of the service application. The service application program is installed in the user terminal 40, and when this program is started, the screen SC1 is displayed. The screen SC1 is a portal screen that enables a user of the vehicle VH to use a service linked to the vehicle VH (hereinafter, also referred to as "connected services"). The AVP service is one of the connected services.

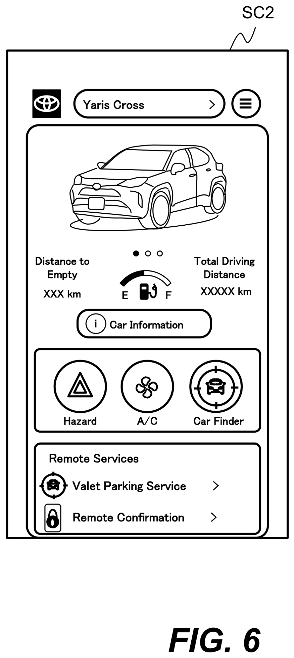

After the AVP user taps the tap area "log in" on the screen SC1 shown in FIG. 5, if authentication based on the user ID, etc. is successful, the screen will transition to screen SC2 shown in FIG. 6. The screen SC2 is a home screen of the connected services. The screen SC2 displays information such as the model name (Yaris Cross) of the AVP user's vehicle VH, an image of the vehicle VH, distance to empty, remaining fuel, and total driving distance. The screen SC2 also includes tap areas (hazard, air conditioner) for operating hazard lights and air conditioner of vehicle VH, and a tap area (car finder) for obtaining information on an actual location of the vehicle VH.

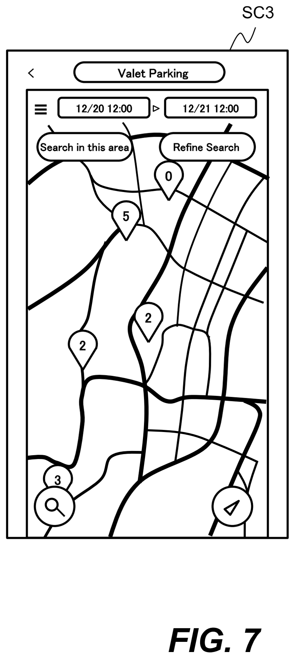

The screen SC2 shown in FIG. 6 further includes tap areas "valet parking service" and "remote confirmation" for using the remote services. The AVP service is one of the remote services. When the AVP user taps the rightward arrow button in the area "valet parking service" shown on the screen SC2, the screen transitions to the screen SC3 shown in FIG. 7. The screen SC3 is a map screen. The screen SC3 is, for example, a map screen of the area around the actual position of the user terminal 40.

At the top of the screen SC3 shown in FIG. 7, an area "valet parking" is displayed. When the AVP user taps the leftward arrow button in the "valet parking" area, the screen returns to the screen SC2 shown in FIG. 6. Below the "valet parking" area, a scheduled usage date and time of the AVP service, such as a check-in date and time (12/20 12:00) and a check-out date and time (12/21 12:00), is displayed. The scheduled usage date and time can be changed on a screen (not shown) that is accessed by tapping the tap area that displays the date and time.

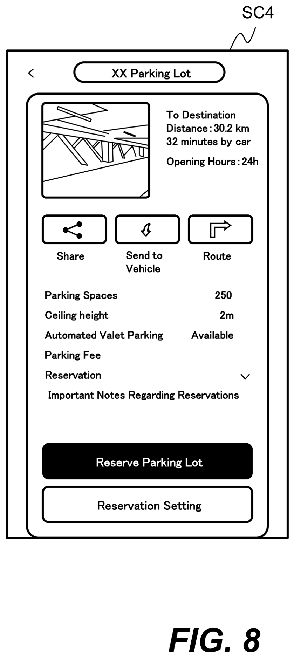

The pin icon shown on the map on the screen SC3 shown in FIG. 7 indicates the location of the parking lot PL where the AVP service can be provided. The number shown in the pin icon indicates the number of parking spaces PS available in the parking lot PL. The AVP user selects the parking lot PL while looking at the screen SC3 and taps its pin icon. This will cause a transition to the screen SC4 shown in FIG. 8. The screen SC4 is an introduction screen for the parking lot (the XX parking lot) selected by the AVP user.

At the top of screen SC4 shown in FIG. 8, an area "XX parking lot" is displayed. When the AVP user taps the leftward arrow button in the area "XX parking lot", the screen returns to the screen SC3 shown in FIG. 7. Below the area "XX parking lot" is displayed an image of the XX parking lot, as well as information such as the distance (30.2 km) from the actual position of the user terminal 40 to the destination (i.e., the location of the XX parking lot), the travel time (32 minutes by car), and opening hours (24 hours).

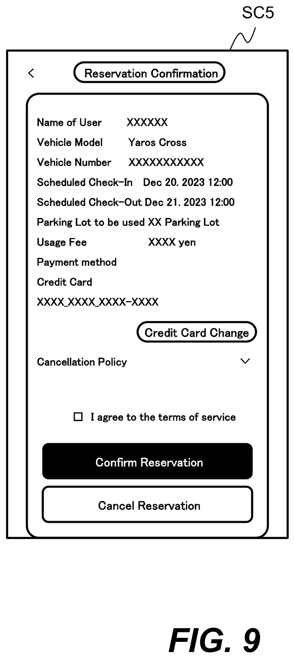

Below the area "XX parking lot" are also displayed specification information for the parking lot, such as the number of parking spaces and ceiling height, and usage property information on the AVP service. It also displays information on how to pay the parking fee. Registration of credit card number etc. is performed on a screen (not shown) that is accessed by tapping the tap area "parking fee." If the AVP user wishes to use the parking lot PL (XX parking lot), the same AVP user taps on the tap area "reserve parking lot." This will cause a transition to the screen SC5 shown in FIG. 9. The screen SC5 is a reservation confirmation screen.

At the top of the screen SC5 shown in FIG. 9, an area "reservation confirmation" is displayed. When the AVP user taps the leftward arrow button in the "reservation confirmation" area, the screen returns to the screen SC4 shown in FIG. 6. Below the "reservation confirmation" area, information such as the name of the person making the reservation (e.g., the name of the AVP user), the model name of the car (Yaris Cross), the vehicle number, the check-in date and time (12/20 12:00), the check-out date and time (12/21 12:00), the name of the parking lot to be used (XX parking lot), the usage fee (XXXX yen), and the payment method are displayed.

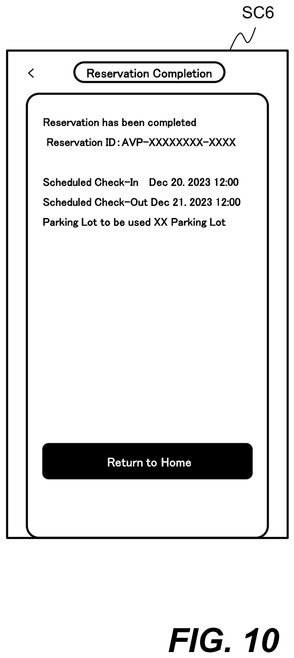

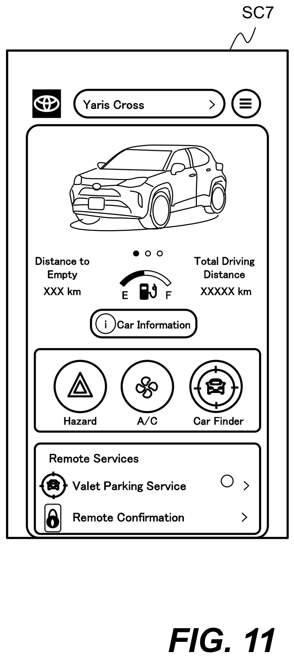

After checking the contents displayed on the screen SC5 shown in FIG. 9, the AVP user taps the box area to the right of "I agree to the terms of service" and then taps the tap area "confirm reservation." This will cause a transition to the screen SC6 shown in FIG. 10. The screen SC6 is a reservation completion screen. At the top of the screen SC6, an area "reservation completion" is displayed. Below the "reservation completion" area, reservation completion information such as the reservation ID, check-in date and time (12/20 12:00), check-out date and time (12/21 12:00), and the name of the parking lot to be used (XX parking lot) are displayed. When the AVP user taps on the tap area "return to home", the screen transitions to the screen SC7 shown in FIG. 11. The screen SC7 is the home screen of the connected service.

Note that the series of the AVP user operations from tapping on the tap area "log in" on the screen SC1 shown in FIG. 5 to tapping on the tap area "confirm reservation" on the screen SC5 shown in FIG. 9 corresponds to the usage reservation in step S11 described in FIG. 3.

The transition to the screen SC7 shown in FIG. 11 also occurs when the AVP user taps the tap area "log in" on the screen SC1 shown in FIG. 5 if there is an AVP service for which a reservation has been completed. The screen SC7 is similar to the screen SC2 described in FIG. 6. The difference between the two screens is whether a circle is displayed near the rightward arrow button in the "valet parking service" area shown on the screen SC7. That is, if there is an AVP service for which a reservation has been completed, the screen transitions to the screen SC7 including the circle, and if not, the screen transitions to the screen SC2.

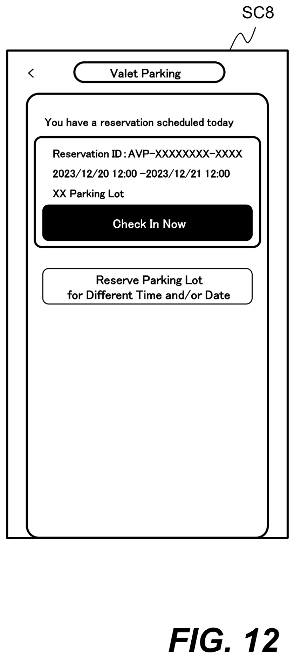

When the AVP user taps the rightward arrow button in the area "valet parking service" shown on the screen SC7 in FIG. 11, the screen transitions to the screen SC8 shown in FIG. 12. The screen SC8 is a check-in screen. The area "valet parking" is displayed at the top of the screen SC8. When the AVP user taps the leftward arrow button in the "valet parking" area, the screen returns to the screen SC7 in FIG. 11. Below the "valet parking" area, information such as the reservation ID, check-in date and time (12/20 12:00), check-out date and time (12/21 12:00), and the name of the parking lot to be used (XX parking lot) are displayed. This information corresponds to the reservation completion information shown in the screen SC6.

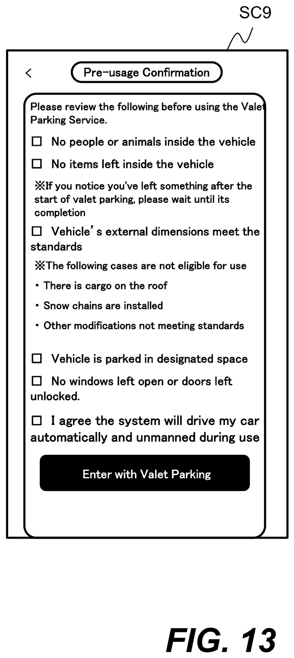

When the AVP user taps on the tap area "check in now" on the screen SC8 shown in FIG. 12, the screen transitions to the screen SC9 shown in FIG. 13. The screen SC9 is a confirmation screen before using the AVP service. At the top of the screen SC9, an area "pre-usage confirmation" is displayed. When the AVP user taps the leftward arrow button in the "pre-usage confirmation" area, the screen returns to the screen SC8 shown in FIG. 12. Furthermore, when the AVP user taps on the tap area "reserve a parking lot for a different date" on the screen SC8, the screen transitions to the screen SC3 shown in FIG. 7.

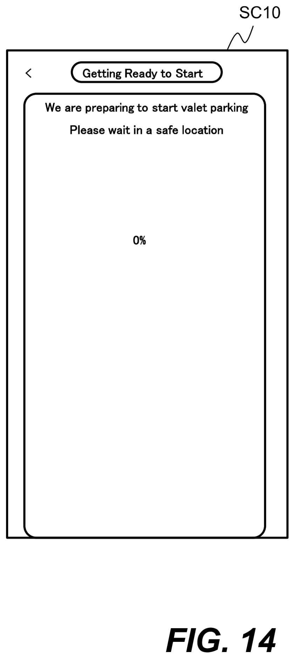

In the area "pre-usage confirmation" on the screen SC9 shown in FIG. 13, in addition to various cautions and disclaimers, the consent statement "I agree the system will drive the car automatically and unmanned during use" is displayed. After checking the contents displayed on the screen SC9, the AVP user taps all box areas to the right of the cautions, disclaimers, and agreements, and then taps the tap area "enter with valet parking." This will cause a transition to the screen SC10 shown in FIG. 14. The screen SC10 is a notification screen that notifies the user that preparations for the parking entry mission have begun.

Note that the series of the AVP user operations from tapping on the tap area "log in" on the screen SC1 shown in FIG. 5 or tapping on the tap area "valet parking" on the screen SC7 shown in FIG. 11 to tapping on the tap area "check in now" on the screen SC8 shown in FIG. 12 corresponds to the check-in request in step S21 described in FIG. 3. Also, the box area of the agreement in the screen SC9 shown in FIG. 13 and the tap by the AVP user on the tap area "enter with valet parking" correspond to the handover instruction described in step S21 of FIG. 3.

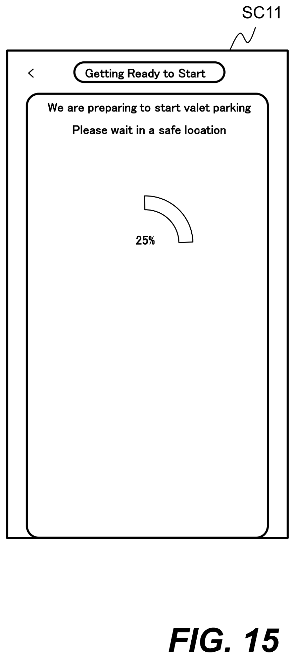

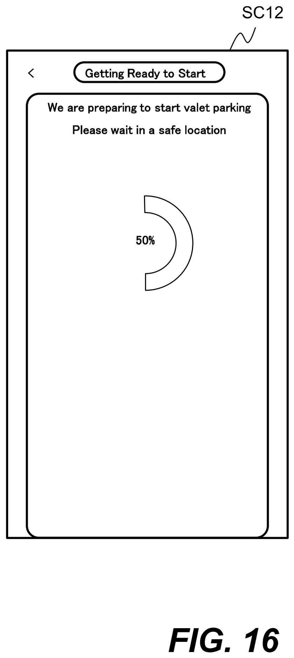

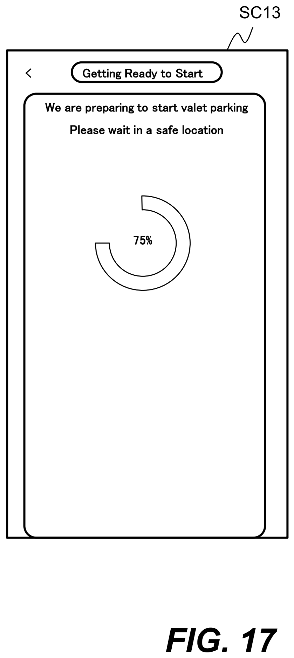

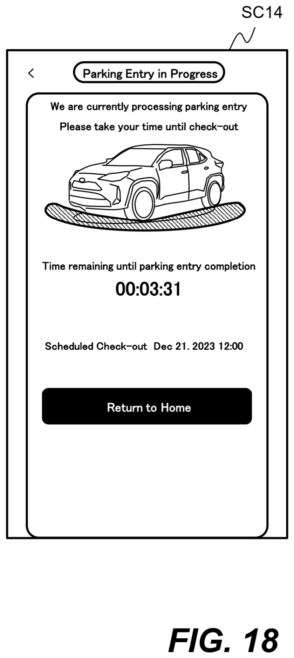

At the top of screen SC10 shown in FIG. 14, an area "getting ready to start" is displayed. When the AVP user taps the leftward arrow button in the "getting ready to start" area, the screen returns to the screen SC9 shown in FIG. 3. The screen SC10 transitions in the order of the screen SC11 (25%) shown in FIG. 15, the screen SC12 (50%) shown in FIG. 16, and the screen SC13 (75%) shown in FIG. 17, depending on the progress rate of the preparation for the parking entry mission. Then, when the preparation for the parking entry mission is complete, the screen transitions to the screen SC14 shown in FIG. 18. The screen SC14 is a notification screen that notifies the AVP user that the parking entry mission is being carried out.

At the top of the screen SC14 shown in FIG. 18, an area "parking entry in progress" is displayed. When the AVP user taps the leftward arrow button in the "parking entry in progress" area, the screen returns to the screen SC7 in FIG. 11. Below the "parking entry in progress" area, information such as a comment for AVP users ("We are currently processing parking entry. Please take your time until check-out."), an image of the vehicle VH, the time remaining until parking entry is complete (3:31, and the check-out date and time (12/21 12:00) is displayed. An effect indicating that the vehicle VH is currently performing a parking entry mission has been added to the bottom of the vehicle image. When the AVP user taps the tap area "return to home" on the screen SC14, the screen returns to the screen SC7 of FIG. 11.

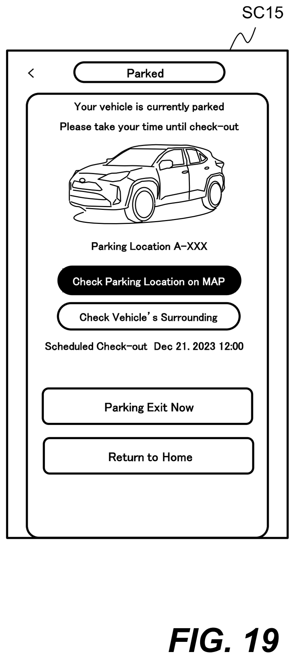

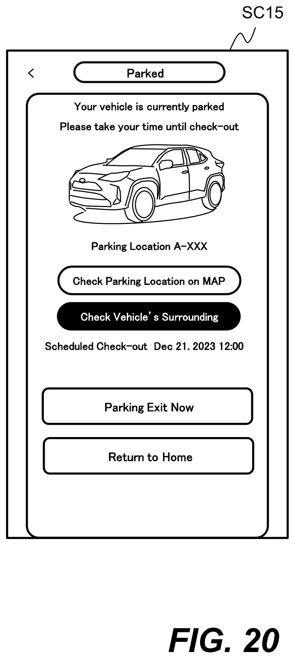

The time remaining to complete the parking entry, shown in FIG. 18, decreases as the parking entry mission progresses. When the parking entry mission is completed (when the remaining time reaches zero), the screen SC14 shown in FIG. 18 transitions to the screen SC15 shown in FIGS. 19 and 20. The screen SC15 is a notification screen that notifies the AVP user that the vehicle VH is parked. The reason why the screen SC15 is shown in both FIG. 19 and FIG. 20 is because the screen transitioned to from the tap area "Check parking location on MAP" is different from the screen transitioned to from the tap area "Check vehicle surrounding image."

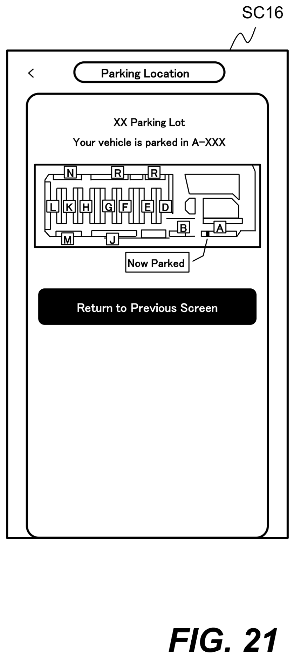

When the AVP user taps on the tap area "Check parking location on MAP" on the screen SC15 shown in FIG. 19, the screen transitions to the screen SC16 shown in FIG. 21. The screen SC16 is a map screen showing the parking location of the AVP user's vehicle VH. In the example shown in FIG. 21, information is displayed indicating that vehicle VH is parked in the parking space "A-XXX" in the XX parking lot, as well as information indicating the location of the parking space "A-XXX" on the map of the XX parking lot. The screen SC16 allows the AVP user to know the parking location of his/her vehicle. When the AVP user taps the tap area "return to previous screen," the screen returns to the screen SC15 shown in FIG. 19.

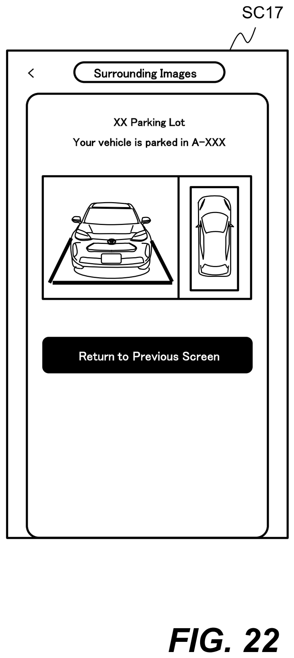

When the AVP user taps on the tap area "Check vehicle's surrounding" on the screen SC15 shown in FIG. 20, the screen transitions to the screen SC17 shown in FIG. 22. The screen SC17 is a screen that displays an image of the surroundings of the AVP user's vehicle VH. In the example shown in FIG. 22, in addition to the information that vehicle VH is parked in the parking space "A-XXX" of the XX parking lot, an image of the vehicle VH is also displayed. The vehicle body image was generated based on the "highlight scene information of the parking entry mission" described above.

On the screen SC17 shown in FIG. 22, a front image of the vehicle VH and a bird's eye view image of the vehicle VH (specifically, a bird's eye view image seen from directly above) are displayed as vehicle body images. The front image and the bird's eye view image may be a still image or a video image. In the case of the still image, a rear image of the vehicle VH may be output in place of the bird's eye view image at the display position of the bird's eye view image. The front image, the bird's eye view image, and the rear image may all be output at the display positions of the front image and the bird's eye view image. In the case of video, a bird's eye view video generated based on images seen from a virtual camera that circles around the vehicle while looking down on the vehicle from diagonally above may be output from the display position of the front image and bird's eye view image.

The screen SC17 shown in FIG. 22 informs the AVP user that his/her vehicle has successfully completed the parking entry mission. The AVP user can also find out the parking location of his/her vehicle. When the AVP user taps the tap area "return to previous screen," the screen returns to the screen SC15 shown in FIG. 20.

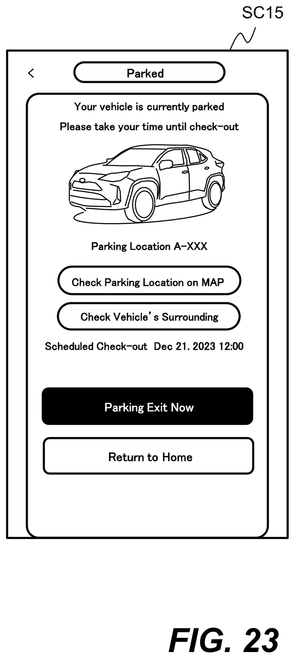

FIG. 23 shows the screen SC15 that is also shown in FIG. 19 and FIG. 20. The transition to the screen SC15 shown in FIG. 23 occurs, for example, when the AVP user who wishes to park the vehicle VH from parking lot PL taps the tap area "log in" on the screen SC1 shown in FIG. 5, and then taps the rightward arrow button in area "valet parking service" on the screen SC7 shown in FIG. 11.

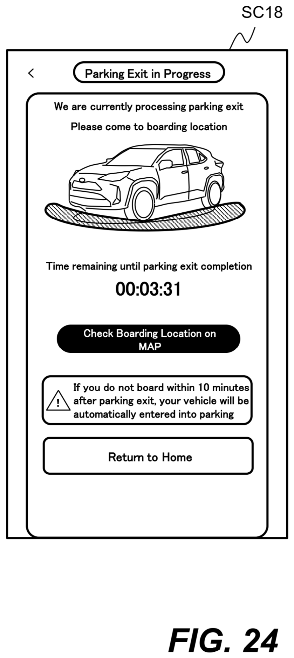

When the AVP user taps on the tap area "parking exit now" on the screen SC15 shown in FIG. 23, the screen transitions to the screen SC18 shown in FIG. 24. The screen SC18 is a notification screen that notifies the AVP user that the parking exit mission is being carried out. In the example shown in FIG. 24, the parking exit mission of the vehicle VH is immediately performed. If preparation is required to carry out the parking exit mission, the screen may transition to screen SC18 after passing through notification screens similar to the screens SC10-SC13 described in FIGS. 14-17 (i.e., the notification screens notifying that preparation for the parking exit mission has begun).

Note that the series of the AVP user operations from tapping on the "log in" tap area on the screen SC1 shown in FIG. 5 to tapping on the "exit now" tap area on the screen SC15 shown in FIG. 23 corresponds to the check-out request in step S31 described in FIG. 3.

At the top of the screen SC18 shown in FIG. 24, an area "parking exit in progress" is displayed. When the AVP user taps the leftward arrow button in the "parking exit in progress" area, the screen returns to the screen SC15 shown in FIG. 23. Below the "parking exit in progress" area, information such as a comment for the AVP user (We are currently parking exit in progress. Please come to the boarding location.), an image of the vehicle VH, and the remaining time until the parking exit is complete (3:31) is displayed. An effect indicating that the vehicle is currently performing the parking exit mission has been added to the bottom of the image of the vehicle VH.

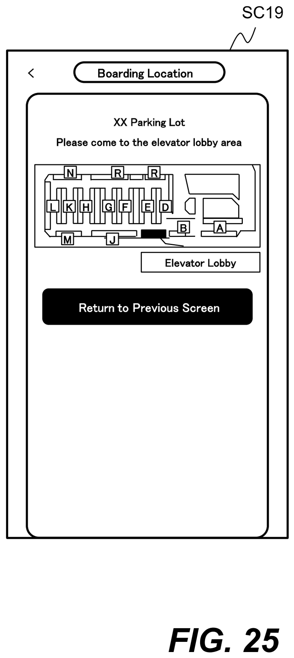

When the AVP user taps on the tap area "Check boarding location on MAP" on the screen SC18 shown in FIG. 24, the screen transitions to the screen SC19 shown in FIG. 25. The screen SC19 is a map screen showing the boarding location of the vehicle VH. In the example shown in FIG. 25, information is displayed indicating that the boarding location is "near the elevator lobby" of the XX parking lot, as well as information showing the location of the "elevator lobby" on the map of the XX parking lot. The screen SC19 allows the AVP user to know the approximate boarding location of his/her vehicle. When the AVP user taps the tap area "return to previous screen," the screen returns to the screen SC18 shown in FIG. 24.

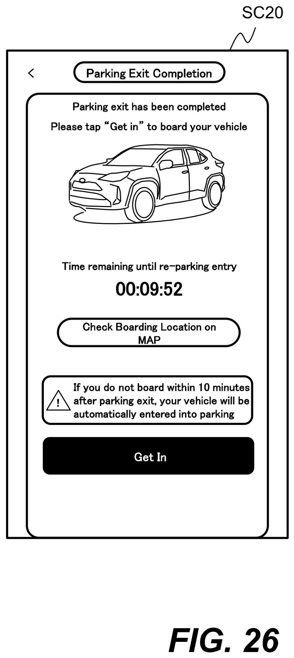

The remaining time until the parking exit is completed on the screen SC18 shown in FIG. 24 decreases as the parking exit mission progresses. When the parking exit mission is completed (when the remaining time becomes zero), the screen SC18 transitions to the screen SC20 shown in FIG. 26. The screen SC20 is a notification screen that notifies the AVP user that the vehicle VH has completed the parking exit. An area "parking exit completed" is displayed at the top of the screen SC20. Below the "parking exit completed" area, information such as a comment for the AVP user (Parking exit has been completed. Please tap "get in" to board), an image of the vehicle VH, and the remaining time until re-parking entry (9:52) is displayed.

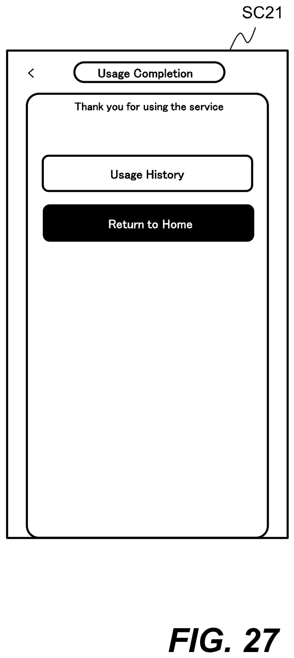

When the AVP user taps the tap area "check boarding location on MAP" on the screen SC20 shown in FIG. 26, the screen transitions to the screen SC19 shown in FIG. 25 or a map screen (not shown) similar to the screen SC19. This map screen displays information showing the location of the pick-up/drop-off space on a map of the XX parking lot, for example, allowing the AVP user to know the exact boarding location of his/her vehicle. When the AVP user taps on the tap area "get in" on the screen SC20, the screen transitions to the screen SC21 shown in FIG. 27. Note that the tap by the AVP user on the tap area "get in" on the screen SC20 shown in FIG. 26 corresponds to the hand back instruction described in FIG. 3.

The screen SC21 shown in FIG. 27 is a notification screen that notifies the AVP user that the AVP service has been completed. An area "usage completion" is displayed at the top of the screen SC21. Below the "usage complete" area, information such as comments for the AVP user (Thank you for using the service) is displayed. When the AVP user taps the tap area "return to home" on the screen SC21, the screen returns to the screen SC2 shown in FIG. 6. When the AVP user taps on the tap area "Usage history" on the screen SC21, the screen transitions to a usage history screen (not shown) of the AVP service.

The screen SC18 shown in FIG. 24 and the screen SC20 shown in FIG. 26 display information such as a comment for the AVP user (if the vehicle is not boarded within 10 minutes after the parking exit, the vehicle will be automatically entered into parking). This information is a reminder regarding the start of the re-parking mission. For example, if the remaining time until the re-parking entry on the screen SC20 reaches zero without the tap on the tap area "get in" on the screen SC20, the re-parking mission starts. When the re-parking mission is initiated, a screen (not shown) similar to the screen SC14 shown in FIG. 18 is displayed.

When the re-parking mission is started, the screen SC20 of FIG. 26 is changed to the screen S14 shown in FIG. 18 When the re-parking mission of the vehicle VH is completed (when the remaining time becomes zero), the screen SC14 shown in FIG. 18 is changed to the screen SC15 shown in FIGS. 19 and 20. The AVP user who wishes to re-exit the parking lot of vehicle VH taps on the tap area "exit now" on the screen SC15 shown in FIG. 23.

## Claims

1. A system for automated valet parking of a vehicle (VH) within a predetermined zone (PL), comprising:
one or more memory devices (12, 26, 32) configured to store in-vehicle camera images (CAM) taken by a camera (28) mounted on the vehicle (VH);
one or more processing circuitry (11, 25, 31) configured to be able to communicate with the one or more memory devices (12, 26, 32); and
a user terminal (40) of the vehicle configured to be able to communicate with the one or more memory devices (12, 26, 32), and also configured to output information on automated valet parking of the vehicle (VH) received from the one or more processing circuitry (11, 25, 31),
wherein the one or more processing circuitry (11, 25, 31) is configured to:
generate highlight scene information on automated valet parking mission based on the in-vehicle camera images (CAM) acquired during an automated valet parking mission of the vehicle (VH) and before vehicle power is stopped at a completion location of the automated valet parking mission; and
transmit information on the automated valet parking mission, including at least the highlight scene information, to the user terminal (40).

2. The system according to claim 1,
wherein the one or more processing circuitry (11, 25, 31) is further configured to:
after generating the highlight scene information, store the highlight scene information in the one or more memory devices (12, 26, 32); and
in response to a request from the user terminal (40) for provision of a camera image of the surroundings of the vehicle, transmit the highlight scene information stored in the one or more memory devices (12, 26, 32) to the user terminal (40).

3. The system according to claim 1 or 2,
wherein the information on the automated valet parking includes information on completion location of the automated valet parking mission,
wherein the one or more processing circuitry (11, 25, 31) is further configured to:
in response to a request from the user terminal (40) for the parking location of the vehicle (VH), generate map information indicating a completion location of the automated valet parking mission based on the information on completion location and map information of the predetermined zone (PL); and
transmit the map information indicating the completion location to the user terminal (40).

4. The system according to any of claims 1 to 3, wherein:
the one or more processing circuitry (25) configured to generate the highlight scene information is included in an information processing device (21) mounted on the vehicle; and
the one or more processing circuitry (11, 31) configured to transmit the highlight scene information to the user terminal (40) is included in a management device (10, 30) configured to manage the automated valet parking.

5. The system according to any of claims 1 to 3,
wherein the one or more processing circuitry (11, 31) configured to generate the highlight scene information and the one or more processing circuitry configured to transmit the highlight scene information to the user terminal (40) are included in a management device (10, 30) configured to manage the automated valet parking.

6. The system according to any of claims 1 to 5,
wherein the automated valet parking mission includes a parking entry mission for the vehicle, a parking exit mission for the vehicle, a re-parking mission for the vehicle, and a repositioning mission for the vehicle.

7. A method for automated valet parking of a vehicle (VH) within a predetermined zone (PL), comprising:
one or more processing circuitry (11, 25, 31) acquiring in-vehicle camera images (CAM) taken by a camera (28) mounted on the vehicle (VH);
the one or more processing circuitry (11, 25, 31) generating highlight scene information on automated valet parking mission based on the in-vehicle camera images (CAM) acquired while the vehicle (VH) is performing an automated valet parking mission and before the vehicle power is stopped at a completion location of the automated valet parking mission;
the one or more processing circuitry (11, 25, 31) transmitting information on automated valet parking of the vehicle (VH), including at least the highlight scene information, to a user terminal (40) of the vehicle; and
the user terminal (40) outputting the information on the automated valet parking.
